# EUROPÄISCHE PATENTSCHRIFT

(11) **EP 1 654 084 B1**
(45) Veröffentlichungstag und Bekanntmachung des Hinweises auf die Patenterteilung: **09.11.2011**
(21) Anmeldenummer: 04763993.5
(22) Anmeldetag: 11.08.2004
(51) Int. Cl.: B23B 51/02, B23B 51/06, B23B 51/12

(54) **Bohrwerkzeug**
Drilling tool
Outil de perçage

(30) Priorität: 13.08.2003 DE 10337203
(43) Veröffentlichungstag der Anmeldung: 10.05.2006
(73) Patentinhaber: KENNAMETAL INC., Latrobe, PA 15650-0231 (US)
(72) Erfinder: KRENZER, Ulrich, 90513 Zirndorf (DE); KAUPER, Herbert, 90403 Nürnberg (DE)
(74) Vertreter: FDST Patentanwälte
(86) Internationale Anmeldenummer: PCT/EP2004/008987
(87) Internationale Veröffentlichungsnummer: WO 2005/018856

(56) Entgegenhaltungen:
- DE-A- 2 946 103
- DE-U- 20 316 350
- FR-A- 564 501
- GB-A- 186 935
- GB-A- 434 383
- US-A- 5 807 041
- US-A- 6 000 887
- US-A1- 2002 172 569
- PATENT ABSTRACTS OF JAPAN Bd. 0131, Nr. 43 (M-811), 7. April 1989 (1989-04-07) -& JP 63 306811 A (MITSUBISHI METAL CORP), 14. Dezember 1988 (1988-12-14)
- PATENT ABSTRACTS OF JAPAN Bd. 2000, Nr. 22, 9. März 2001 (2001-03-09) -& JP 2001 121332 A (NACHI FUJIKOSHI CORP), 8. Mai 2001 (2001-05-08)
- PATENT ABSTRACTS OF JAPAN Bd. 0102, Nr. 11 (M-501), 24. Juli 1986 (1986-07-24) & JP 61 050706 A (HITACHI LTD), 13. März 1986 (1986-03-13)

## Beschreibung

Die Erfindung betrifft ein Bohrwerkzeug mit zwei an dessen gegenüberliegenden Enden angeordneten Bohrerspitzen nach dem Oberbegriff des Anspruchs 1. Unter einem Bohrwerkzeug wird hierbei ein zur Erzeugung einer Bohrung mit konstantem Durchmesser vorgesehener Bohrer ebenso verstanden wie beispielsweise ein Stufenbohrer oder ein Bohr-Senk-Werkzeug.

Ein doppelspitziges Bohrwerkzeug ist beispielsweise aus der DE 1 752 616 A1 bekannt. Dieses doppelspitzige Bohrwerkzeug ist aus einem fließgepressten Profil gefertigt, welches in einzelne Stäbchen unterteilt wird. Aufgrund des Fließpressverfahrens weisen die Spannuten des Bohrwerkzeugs über dessen Länge ein unveränderliches Profil auf.

Aus der GB 434 383 ist weiterhin ein Doppelsplitz-Bohrer mit einer von der einen Bohrerspitze bis zu anderen Bohrerspitze reichenden wendelförmigen Spannut gemäß dem Oberbegriff des Anspruchs 1 zu entnehmen.

Ein Bohrwerkzeug, insbesondere zur Metallbearbeitung, weist häufig mindestens einen auswechselbaren Schneideinsatz auf. Der Grundkörper, an welchem der Schneideinsatz befestigbar ist, ist somit über die Nutzungsdauer des Schneideinsatzes hinaus verwendbar. Bohrwerkzeuge mit auswechselbaren Schneideinsätzen sind jedoch typischerweise auf größere Durchmesser beschränkt. Für kleinere Bohrungsdurchmesser, beispielsweise bis 10 mm, werden in der Regel einstückige Bohrer verwendet. Trotz der im Allgemeinen gegebenen Nachschleifmöglich-keit ist deren Standzeit wesentlich geringer als die eines Bohrers mit auswechselbarem Schneideinsatz oder mehreren auswechselbaren Schneideinsätzen.

Der Erfindung liegt die Aufgabe zugrunde, ein Bohrwerkzeug anzugeben, welches insbesondere auch bei Werkzeugdurchmessern bis 10 mm eine besonders lange Nutzungsdauer erlaubt.

Diese Aufgabe wird erfindungsgemäß gelöst durch ein Bohrwerkzeug mit den Merkmalen des Anspruchs 1. Das Bohrwerkzeug weist an jedem Ende eine Bohrerspitze mit jeweils mindestens zwei Schneidkanten auf. Gewendelte Spannuten erstrecken sich von den Schneidkanten an der einen Bohrerspitze durchgehend bis zu den Schneidkanten an der anderen Bohrerspitze. Im Bereich der Bohrerspitzen weist jede der entsprechend der Anzahl der Schneidkanten pro Bohrerspitze mindestens zwei Spannuten eine in sich asymmetrische Form auf. Durch die asymmetrische Gestaltung jeder Spannut sind diese besonders gut auf eine für die Zerpanung günstige Schneidengeometrie mit gezielter Spanformung abstimmbar. Das asymmetrische Profil der Spannuten geht zum mittleren Bereich in ein symmetrisches Profil über, um im weiteren Verlauf der Spannuten zur zweiten Bohrerspitze hin wiederum eine unsymmetrische Form anzunehmen, welche vorzugsweise der Form an der ersten Bohrerspitze entspricht. Abweichend hiervon kann die Geometrie der zweiten Bohrerspitze auch von der Geometrie der ersten Bohrerspitze abweichen, auch einen zumindest geringfügig unterschiedlichen Durchmesser aufweisen, wobei in jedem Fall ein unsymmetrisches Profil jeder Spannut im an die Bohrerspitzen grenzenden Bereich und ein symmetrisches Spannutprofil in dem dazwischen liegenden mittleren Bereich gegeben ist. Die Standzeit des Bohrwerkzeugs, im Folgenden kurz auch als Bohrer bezeichnet, ist damit im Vergleich zu einem herkömmlichen Bohrer mit nur einer Bohrerspitze auf das Doppelte verlängert. Weiterhin weist des Bohrwerkzeug im mittleren Bereich einen reduzierten Durchmesser auf.

Das Bohrwerkzeug ist, unabhängig davon, ob dieses aus einem einheitlichen Werkstoff oder aus mehreren unterschiedlichen Werkstoffen gebildet ist, vorzugsweise nicht zum Zerlegen, etwa zur Entnahme eines Schneideinsatzes, vorgesehen. Als Werkstoffe des Bohrers sind sämtliche Werkstoffe oder Werkstoffkombinationen, mit oder ohne Beschichtungen, die bei herkömmlichen Bohrern mit einer einzigen Bohrerspitze bekannt sind, verwendbar. Sofern die Bohrerspitzen durch gesonderte Werkzeugspitzen gebildet sind, sind diese bevorzugt dauerhaft, beispielsweise durch Lötung, mit dem Grundkörper des Bohrwerkzeugs verbunden, wobei die Werkzeugspitzen bevorzugt aus einem in Vergleich zum Grundkörper härteren Material gebildet sind. Die Spannuten erstrecken sich auch in dieser Ausführungsform über das gesamte Bohrwerkzeug einschließlich des Grundkörpers.

Nach einer bevorzugten Ausgestaltung weist das Bohrwerkzeug Kühlkanäle auf, welche sich jeweils von einer Bohrerspitze bis zur gegenübeniegendem Bohrerspitze erstrecken. Jeder Kühlkanal ist damit jeweils einer Schneidkante an jeder Bohrerspitze zugeordnet, wobei die Funktion der Einlass- und Auslassöffnungen der Kühlkanäle vertauschbar ist.

Im Bereich der Bohrerspitzen weist das Bohrwerkzeug beispielsweise eine Form auf, die einer der aus der EP 0 249 104 A1, der DE 100 271 544 A1 oder der DE 199 55 172 A1 bekannten Spiralbohrer entspricht. Derartige Spiralbohrer zeichnen sich insbesondere durch gute Anbohreigenschaften und hohe mögliche Vorschübe bei dennoch hohen Standzeiten aus.

Das Bohrwerkzeug bildet zusammen mit einer Einspannvorrichtung vorzugsweise eine Bohrvorrichtung mit den Merkmalen des Anspruchs 6. Teil der Einspannvorrichtung ist eine Einspannhülse, welche eine der Form der Spannuten des Bohrers zumindest teilweise angepasste Innenprofilierung aufweist und damit eine besonders präzise Einspannung ermöglicht. Hierbei ist vorzugsweise zumindest ein Öffnungsquerschnitt der Einspannhülse zumindest teilweise der Form der Spannuten angepasst. Hierdurch wird ein Eindringen von Spänen in die Einspannhülse verhindert. Des Weiteren dient bevorzugt eine insgesamt, d.h. auf zumindest dem Großteil der Länge der Einspannhülse, an die Geometrie des Bohrwerkzeugs angepasste Innenprofilierung der Einspannhülse dazu, eine zuverlässige Einspannung des Bohrwerkzeugs zu ermöglichen, welche der Einspannung eines herkömmlichen Bohrwerkzeugs am Schaft als nicht genutetem Werkzeugteil vergleichbar ist.

Alternativ zur Ausgestaltung nach Anspruch 6 ist auch eine herkömmliche Spannzange ohne Innenprofilierung zum Einspannen des Bohrwerkzeugs geeignet, soweit die Dehnrate der Spannzange ausreichend groß ist, um eventuelle Durchmessersprünge oder -übergänge des Bohrers zu überbrücken.

Nach einer bevorzugten Weiterbildung der Einspannvorrichtung nach Anspruch 6 ist eine mit der Einspannhülse zusammenwirkende, insbesondere in diese eingesetzte oder auf diese aufgesetzte Dichtscheibe vorgesehen, durch welche eine verbesserte Abdichtung gegenüber Kühlschmiermittel erreichbar ist. Bevorzugt ist die Dichtscheibe auf der der hinteren Bohrerspitze zugewandten Seite der Einspannhülse angeordnet. Hierdurch gelangt kein oder nahezu kein Kühlschmiermittel, welches in das Bohrwerk zeug eingeleitet wird, in die Einspannhülse oder zwischen dem Bohrer und der Einspannhülse nach außen. Unter der hinteren Bohrerspitze wird die im jeweiligen Betriebszustand nicht zur Zerspanung vorgesehene Bohrerspitze verstanden. Die in diesem Bereich angeordnete Dichtscheibe stellt darüber hinaus einen mechanischen Schutz für die hintere Bohrerspitze dar, welche beispielsweise aufgrund beim Zerspanungsbetrieb auftretender Vibrationen gefährdet sein kann.

Um die Einspannhülse auf einfache Weise in herkömmliche Spannfutter, z.B. Hydraulik-Dehnspannfutter, einsetzen zu können, weist sie vorzugsweise einen konstanten Außendurchmesser auf. Als Material der in diesem Fall auch als Spannschaft bezeichneten Einspannhülse wird vorzugsweise Kunststoff oder ein anderes nachgiebiges Material wie Gummi verwendet. Die innenseitige Oberfläche der Einspannhülse ist bevorzugt derart gestaltet, dass die Einspannhülse zugleich die Funktion einer Dichtscheibe erfüllt. Der Bohrer ist in dieser Ausgestaltung zum Einschrauben in den Spannschaft vorgesehen. Der Spannschaft kann entweder über dessen gesamte Länge eine konstante Innenprofilierung aufweisen oder zur Aufnahme des Bohrwerkzeugs mit einem Sackloch versehen sein. Im Fall der Ausbildung mit einem Sackloch kann dem Bohrwerkzeug Kühlschmiermittel von außen zugeführt werden. Ebenso ist es jedoch auch möglich, anstelle des Sacklochs einen Bereich kleineren Innendurchmessers vorzusehen, durch welchen dem Bohrer Kühlschmiermittel axial zugeführt werden kann.

Der Vorteil der Erfindung liegt insbesondere darin, dass ein Bohrer mit zwei Spitzen und durchgehenden Spannuten mittels einer auf diesen abgestimmten Einspannhülse analog einem herkömmlichen Bohrer mit nur einer Spitze nutzbar ist, wobei im Vergleich zu einem solchen herkömmlichen Bohrer keinerlei Nutzungseinschränkungen, etwa hinsichtlich der maximalen Bohrtiefe, existieren.

Nachfolgend werden mehrere Ausführungsbeispiele der Erfindung anhand einer Zeichnung näher erläutert. Hierin zeigen:
- Fig. 1a, 1 b bis Fig. 3a, 3b: jeweils in schematischen Schnitten ein Ausführungsbeispiel eines Bohrwerkzeugs mit zwei Bohrerspitzen,
- Fig. 4 und 5: in schematischer Seitenansicht jeweils ein weiteres Ausführungs-
- Fig. 6a, 6b: beispiel eines Bohrwerkzeugs mit zwei Bohrerspitzen, verschiedene Querschnitte des Bohrwerkzeugs nach Fig. 4,
- Fig. 7a, 7b: eine Einspannhülse für ein Bohrwerkzeug mit zwei Bohrerspitzen
- Fig. 8a bis 8c: und durchgehenden Spannnuten, eine Dichtscheibe für eine Einspannhülse nach Fig. 7a, 7b,
- Fig. 9a, 9b: eine Anordnung mit einer Einspannhülse nach Fig. 7a, 7b, und einer Dichtscheibe nach Fig. 8a bis 8c,
- Fig. 10a, 10b: eine Anordnung mit einem Dehnspannfutter, einer Einspannhülse nach Fig. 7a, 7b, einer Dichtscheibe nach Fig. 8a bis 8c und einem Bohrer mit zwei Bohrerspitzen.
- Fig. 11: ein Dehnspannfutter mit einem eingespannten Bohrer,
- Fig. 12a, 12b: einen in ein Dehnspannfutter nach Fig. 11 einspannbaren Kunststoffschaft,
- Fig. 13a, 13b: einen Bohrer in einem Kunststoffschaft in unterschiedlichen Anordnungen, und
- Fig. 14a, 14b: einen Bohrer in einem Kunststoffschaft alternativer Ausführungsform.

Einander entsprechende oder gleich wirkende Teile sind in allen Figuren mit den gleichen Bezugszeichen versehen.

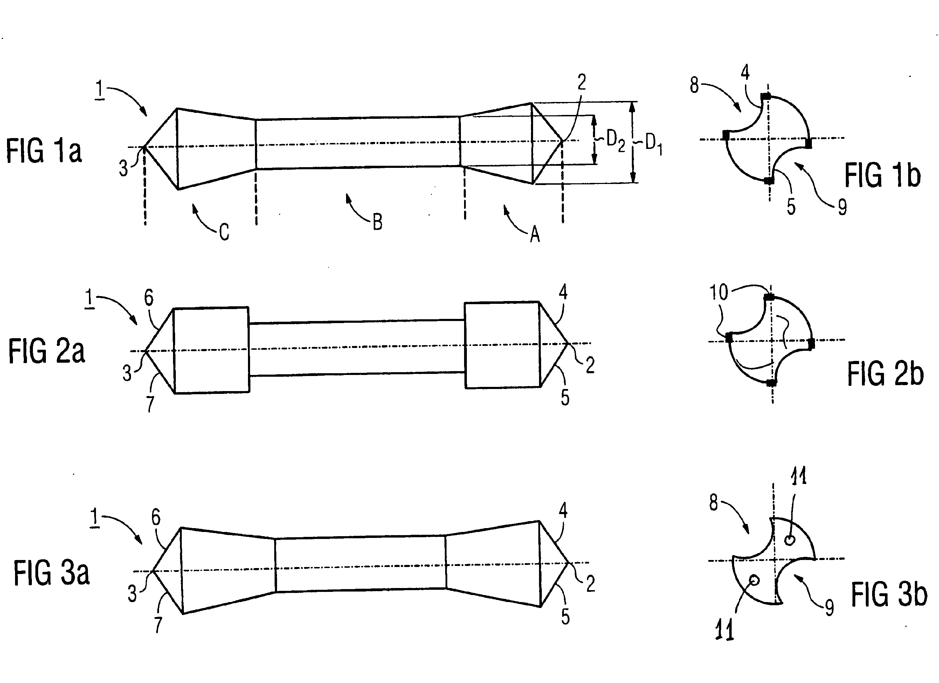

Die Fig. 1a und 1b bis 3a und 3b zeigen jeweils ein Ausführungsbeispiel eines Bohrwerkzeugs 1 mit zwei Bohrerspitzen 2,3. Jedes Bohrwerkzeug 1 ist einstückig ausgebildet und weist einen an die erste Bohrerspitze 2 grenzenden ersten Bereich A, einen daran anschließenden mittleren Bereich B und einen an die zweite Bohrerspitze 3 anschließenden hinteren Bereich C auf. In den Ausführungsbeispielen ist ein reduzierter Durchmesser D₂ im mittleren Bereich B geringer als der Werkzeugdurchmesser D₁. Hierdurch, insbesondere im besonders bevorzugten Ausführungsbeispiel nach Fig. 2a und 2b, kann ein Satz verschiedener Werkzeuge jeweils unterschiedliche Werkzeugdurchmesser D₁, die in jedem Fall durch die äußeren Bereiche A, C des Bohrwerkzeugs 1 gegeben sind, aber identische reduzierte Durchmesser D₂ aufweisen. Sämtliche Werkzeuge des Satzes sind damit für dieselbe Einspannvorrichtung geeignet. Die Schneidkanten jedes Bohrwerkzeugs 1 sind mit den Bezugszeichen 4,5,6,7, die zugehörigen Spannuten mit den Bezugszeichen 8,9 versehen. In den Ausführungsbeispielen nach den Fig. 1a und 1b sowie 2a und 2b sind zusätzlich jeweils vier Führungsfasen 10 vorgesehen. Lediglich beispielhaft sind im Ausführungsbeispiel nach Fig. 3a und 3b zwei Kühlkanäle 11 dargestellt, welche bevorzugt ebenso in allen anderen Ausführungsbeispielen vorhanden sind.

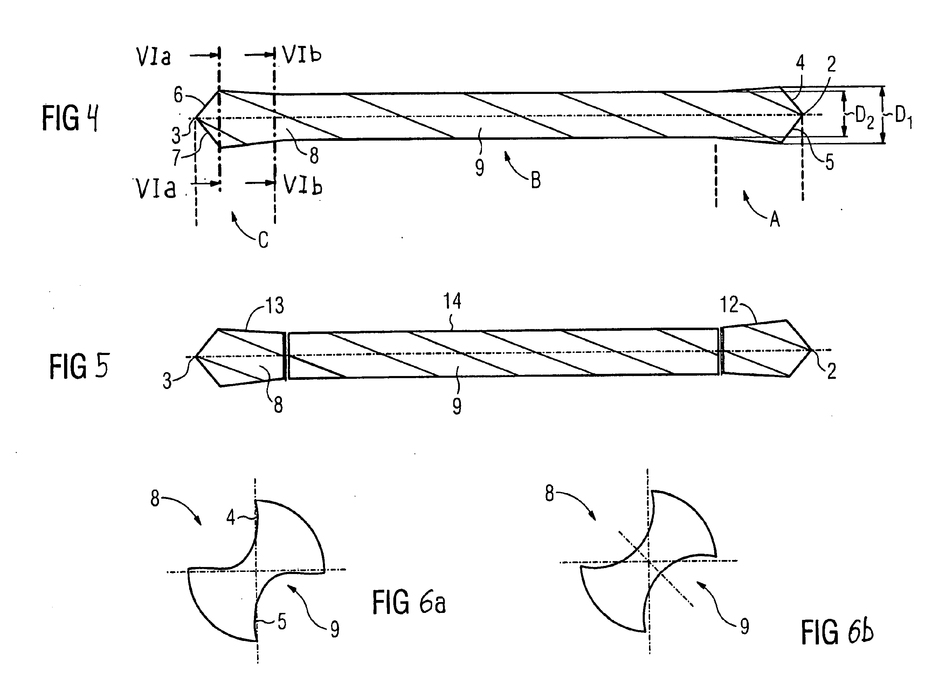

Die Fig. 4 und 5 veranschaulichen die Form der sich jeweils über das gesamte Bohrwerkzeug 1 erstreckenden Spannuten 8,9. Während im Ausführungsbeispiel nach Fig. 4 das Bohrwerkzeug 1 einteilig, beispielsweise aus im CVD (chemical vapour deposition) - Verfahren beschichtetem Hartmetall, ausgebildet ist, sind im Ausführungsbeispiel nach Fig. 5 zwei Werkzeugspitzen 12,13, beispielsweise aus beschichtetem oder unbeschichtetem Hartstoff, mit einem Grundkörper 14, welcher den mittleren Bereich B des Bohrwerkzeugs 1 bildet, dauerhaft verbunden, insbesondere auf den Grundkörper 14 aufgelötet.

Die Fig. 6a und 6b zeigen zwei unterschiedliche Querschnitte des Bohrwerkzeugs 1 nach Fig. 4. Im Bereich des maximalen Werkzeugdurchmessers D₁ weist das Bohrwerkzeug 1 das in Fig. 6a dargestellte asymmetrische Profil der Spannuten 8,9 auf, welches auf den Schneidvorgang und die Spanbildung optimiert ist. Hierbei ist jede Spannut 8,9 in sich unsymmetrisch, wobei die Form der ersten Spannut 8 der Form der zweiten Spannut 9 entspricht. Dagegen ist im Bereich des reduzierten Durchmessers D₂ der Querschnitt jeder Spannut 8, 9, wie in Fig. 6b dargestellt, bei insgesamt im Vergleich zu den äußeren Bereichen A,C des Bohrers 1 erweiterten Spannuten 8,9 in sich symmetrisch. Die damit hinsichtlich des Spantransports optimierten Spannuten 8,9 weisen innerhalb des gesamten mittleren Bereichs B einen konstanten Querschnitt auf. Der Übergang zwischen den den Bohrerspitzen 2,3 zugewandten, in sich unsymmetrischen und dem mittleren, symmetrischen Bereich jeder Spannut 8,9 ist fließend, das heißt ohne Kanten, ausgebildet.

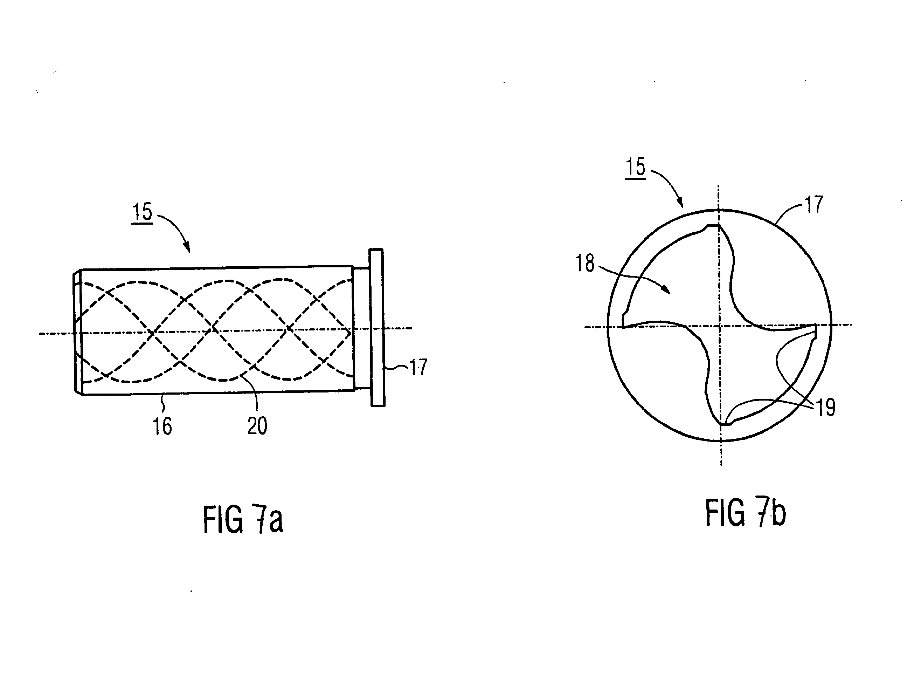

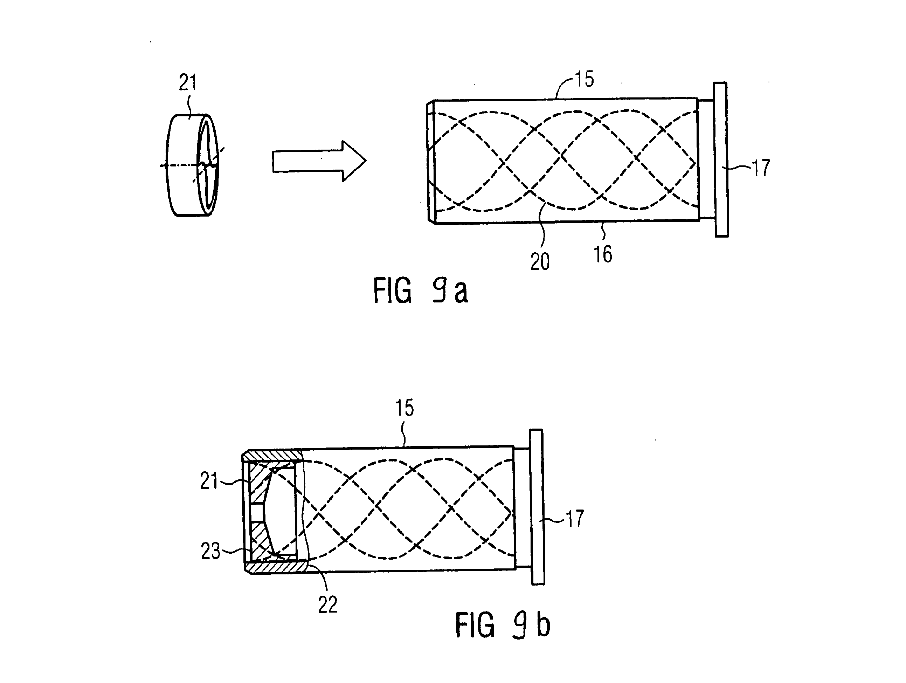

Die Fig. 7a und 7b zeigen eine Einspannhülse 15, welche für ein Bohrwerkzeug 1 beispielsweise nach Fig. 4 oder 5 geeignet ist. Die Einspannhülse 15 ist aus einem Zylinderkörper 16 und einem Deckel 17 zusammengesetzt, welcher einen der Form der Spannuten 8, 9 näherungsweise angepassten Öffnungsquerschnitt 18 aufweist. Der Öffnungsquerschnitt 18 weist auf die Führungsfasen 10 abgestimmte Nuten 19 auf, welche sich als Teil einer Innenprofilierung 20, wie in Fig. 9a gestrichelt angedeutet, in den Zylinderkörper 16 hinein fortsetzen.

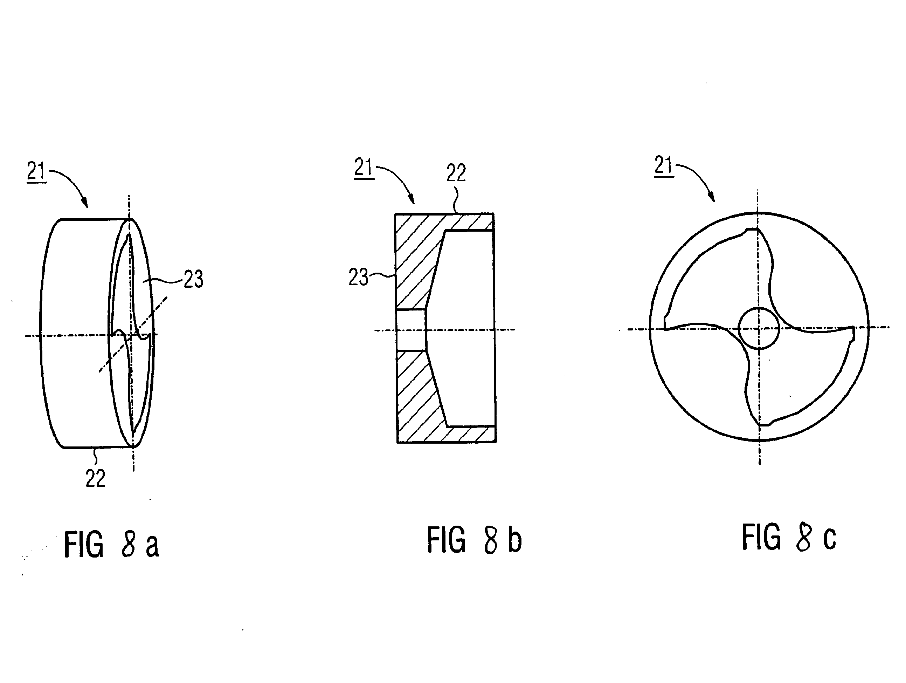

In den Fig. 8a bis 8c ist eine aus einem Elastomer gebildete Dichtscheibe 21 dargestellt, welche einen zylindermantelförmigen Randabschnitt 22 und eine von diesem begrenzten, dem Querschnitt der Spannuten 8, 9 angepsste Dichtfläche 23 aufweist.

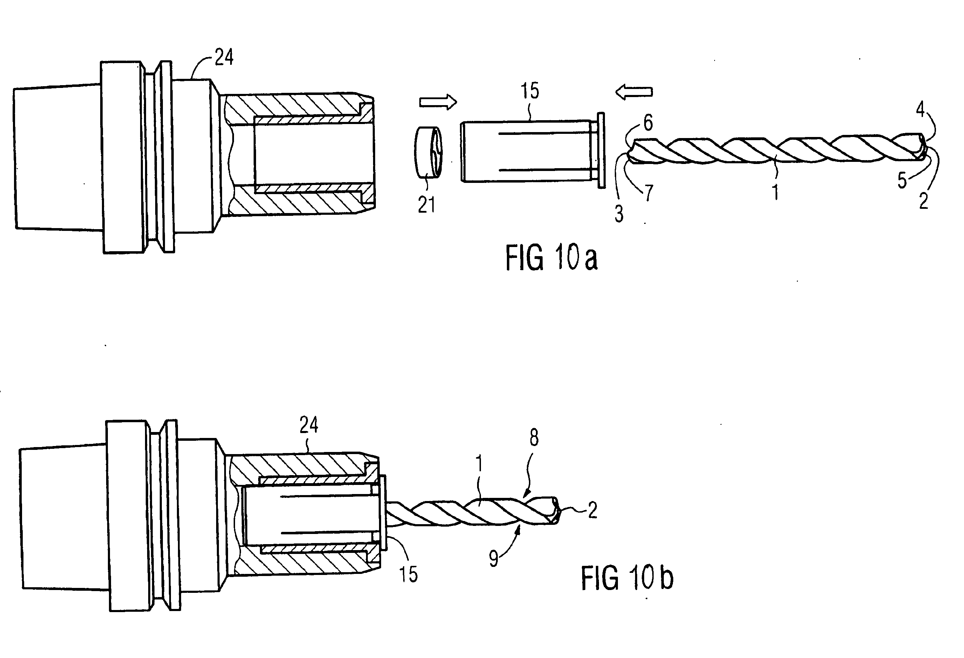

Die Funktion der Einspannhülse 15 sowie der Dichtscheibe 21 ist anhand der Fig. 9a und 9b sowie 10a und 10b näher ersichtlich. Danach wird das Bohrwerkzeug 1 mit Hilfe der Einspannhülse 15, in welche die Dichtscheibe 21 auf der der zur Zerspanung vorgesehenen Bohrerspitze 2 abgewandten Seite eingesetzt ist, in einem Dehnspannfutter 24 eingespannt. Das Bohrwerkzeug 1 kann in axial unterschiedlichen Positionen im Dehnspannfutter 24, welches grundsätzlich durch ein Spannfutter anderer Bauart, beispielsweise ein Spannzangenfutter, ersetzbar ist, eingespannt werden. Allgemein werden die Schneidkanten 4,5, welche beim Zerspanungsbetrieb verwendet werden, auch als vordere Schneidkanten, und die an der nicht aktiven, als Reserve vorgehaltenen Bohrerspitze 3 angeordneten Schneidkanten 6,7 als hintere Schneidkanten bezeichnet. Das innerhalb des Dehnspannfutters 24 dem Bohrwerkzeug 1 zugeleitete Kühlschmiermittel kann aufgrund der Dichtscheibe 21 höchstens zu einem geringen Teil durch die Spannuten 8,9 fließen und wird somit durch die in diesem Ausführungsbeispiel nicht sichtbaren Kühlkanäle 10 zur Bohrerspitze 2 geleitet.

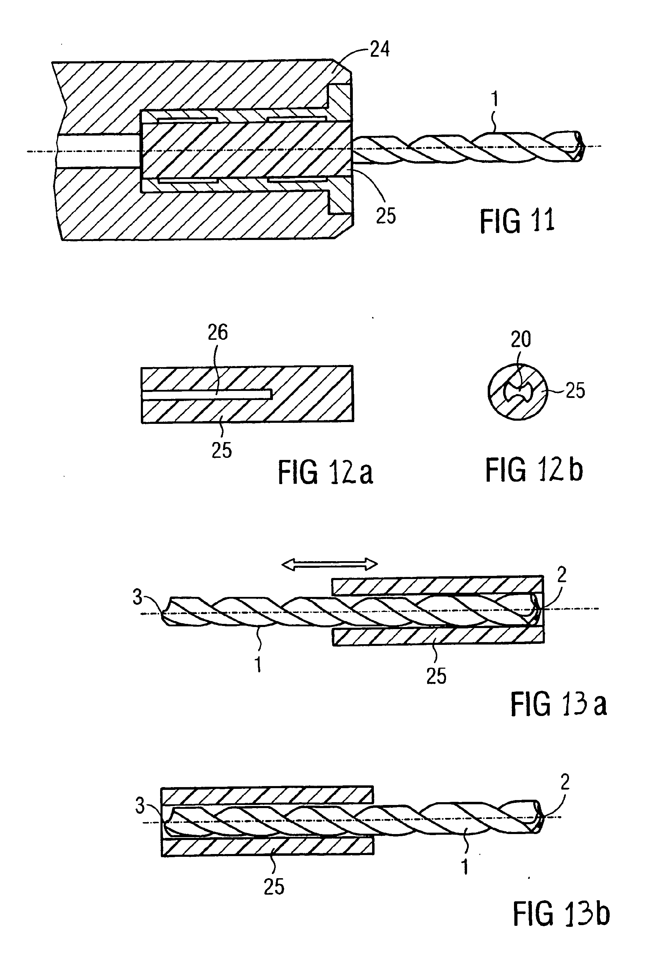

Die Fig. 11 zeigt innerhalb einer Darstellung ähnlich Fig. 10b ein in einem Dehnspannfutter 24 eingespanntes doppelspitziges Bohrwerkzeug 1. Anstelle der Einspannhülse 15 nach Fig. 10b kommt jedoch ein Kunststoffschaft 25 zum Einsatz. Der Kunststoffschaft 25 allein ist in einer schematischen Seiten- bzw. Frontansicht in den Fig. 12a und 12b dargestellt. In der Frontansicht (Fig. 12b) ist erkennbar, dass der Querschnitt des Kunststoffschaftes 25 prinzipiell dem Querschnitt der Dichtscheibe 21 (Fig. 8a bis Fig. 8c) gleicht, d. h. eine dem Querschnitt des Bohrers 1 angepasste Öffnungsfläche aufweist. Um ein leichteres Eindrehen des Bohrers 1 in den Kunststoffschaft 25 zu ermöglichen und insbesondere eine Eignung des Kunststoffschaftes 25 für Bohrer 1 unterschiedlichen Durchmessers herzustellen sind sich über etwas mehr als die Hälfte der Länge des Kunststoffschaftes 25 erstreckende Schlitze 26 in Axialrichtung vorgesehen. Der Kunststoffschaft 25 nach den Figuren 12a und 12b ist für ein Bohrwerkzeug 1 mit einem Drallwinkel der Spannuten von 30° ausgebildet. Die Schlitze 26 sind insbesondere dann entbehrlich, wenn der Kunststoffschaft 25 lediglich für einen genau bestimmten Bohrerdurchmesser vorgesehen ist.

Aus den Figuren 13a und 13b ist der Längsschnitt des Kunststoffschaftes 25 ersichtlich. Ferner ist aus diesen Darstellungen, wie auch durch einen Doppelpfeil angedeutet, ersichtlich, dass der Kunststoffschaft 25 wahlweise auf jeder der beiden Seiten des Bohrwerkzeugs 1 angeordnet werden kann. Dabei schließt eine der Bohrerspitzen 2 jeweils etwa annähernd bündig mit der Stirnseite des Kunststoffschaftes 25 ab. Abweichend vom dargestellten Ausführungsbeispiel kann der Bohrer innerhalb des Schaftes beliebig axial verlagert sein.

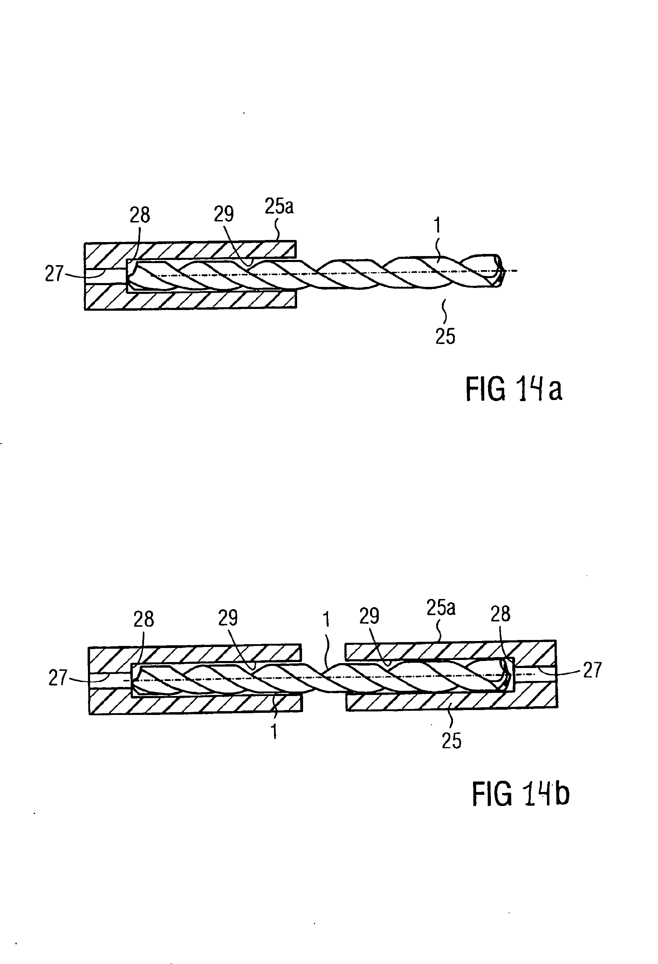

Die Figuren 14a und 14b zeigen in Ansichten ähnlich den Figuren 13a und 13b ein in einem Kunststoffschaft 25a gehaltenes Bohrwerkzeug 1. Im Unterschied zum Kunststoffschaft 25 nach den Figuren 11 bis 13b weist der Kunststoffschaft 25a nach den Figuren 14a und 14b keinen konstanten Innendurchmesser sondern eine Durchmesserverjüngung 27 auf. Bei vollständig in den Kunststoffschaft 25a eingedrehtem Bohrwerkzeug 1 liegt dessen Spitze 2 an einer Umfangsstufe 28 an, die den Verjüngungsabschnitt 27 von der übrigen, nicht verjüngten Innenwandung 29 des Kunststoffschaftes 25a trennt. Hierdurch ist im Gegensatz zu den Ausführungsbeispielen nach den Figuren 11 bis 13b die Bohrerspitze 2 von der Stirnseite des Kunststoffschaftes 25 beabstandet. Der Verjüngungsabschnitt 27 kann genutzt werden, um dem Bohrwerkzeug 1 Kühlschmiermittel zuzuführen, bildet also bedarfsweise einen Kühlschmiermittelkanal. Ist keine Zuführung von Kühlschmiermittel beabsichtigt, so kann der Kunststoffschaft 25a an Stelle des Verjüngungsabschnitts 27 vollständig geschlossen sein.

### Bezugszeichenliste

- 1: Bohrwerkzeug
- 2: Bohrerspitze
- 3: Bohrerspitze
- 4: Schneidkante
- 5: Schneidkante
- 6: Schneidkante
- 7: Schneidkante
- 8: Spannut
- 9: Spannut
- 10: Führungsfase
- 11: Kühlkanal
- 12: Werkzeugspitze
- 13: Werkzeugspitze
- 14: Grundkörper
- 15: Einspannhülse
- 16: Zylinderkörper
- 17: Deckel
- 18: Öffnungsquerschnitt
- 19: Nut
- 20: Innenprofilierung
- 21: Dichtscheibe
- 22: Randabschnitt
- 23: Dichtfläche
- 24: Dehnspannfutter
- 25: Kunststoffschaft
- 26: Schlitz
- 27: Durchmesserverjüngung
- 28: Umfangsstufe
- 29: Innenwandung

- A,B,C: Bereich
- D₁: Werkzeugdurchmesser
- D₂: reduzierter Durchmesser

## Patentansprüche

1. Bohrwerkzeug mit
- einer ersten Bohrerspitze (2) und mindestens zwei vorderen Schneidkanten (4,5),
- einer zweiten Bohrerspitze (3) und mindestens zwei hinteren Schneidkanten (6,7),
- jeweils einer von einer vorderen Schneidkante (4,5) zu einer hinteren Schneidkante (6,7) verlaufenden, gewendelten Spannut (8,9),
**dadurch gekennzeichnet,**
**dass** die Spannut (8,9) in einem an die vordere Bohrerspitze (2) grenzenden Bereich (A) in sich unsymmetrisch, in einem mittleren Bereich (B) in sich symmetrisch und in einem an die hintere Bohrerspitze (3) grenzenden Bereich (C) in sich unsymmetrisch ausgebildet ist und dass der mittlere Bereich (B) einen im Vergleich zu einem an den Bohrerspitzen (2,3) ausgebildeten maximalen Werkzeugdurchmesser (D₁) reduzierten Durchmesser (D₂) aufweist.

2. Bohrwerkzeug nach einem der vorhergehenden Ansprüche,
**dadurch gekennzeichnet,**
**dass** die Spannuten (8,9) in den an die Bohrerspitzen (2,3) grenzenden Bereichen (A,C) identisch ausgebildet sind.

3. Bohrwerkzeug nach einem der vorhergehenden Ansprüche,
**dadurch gekennzeichnet,**
**dass** die Bohrerspitzen (2,3) jeweils durch eine mit dem Grundkörper (14) verbundene Werkzeugspitze (12,13) gebildet sind.

4. Bohrwerkzeug nach einem der vorhergehenden Ansprüche,
**gekennzeichnet durch**
einen jeweils einer Schneidkante (4,5,6,7) an beiden Bohrerspitzen (2,3) zugeordneten Kühlkanal (11).

5. Bohrwerkzeug-Satz umfassend mehrere Bohrwerkzeuge nach einem der vorhergehenden Ansprüche
**dadurch gekennzeichnet,**
**dass** die Bohrwerkzeuge unterschiedliche Werkzeugdurchmesser (D₁) jedoch gleiche Durchmesser (D₂) im mittleren Bereich (B) aufweisen

6. Bohrvorrichtung, umfassend
• ein Bohrwerkzeug nach einem der Ansprüche 1 bis 4,
• eine Einspannvorrichtung mit einer Einspannhülse (15,25,25a) mit einer der Form der Spannuten (8,9) zumindest teilweise angepassten Innenprofilierung (20), in die das Bohrwerkzeug austauschbar eindrehbar ist.

7. Bohrvorrichtung nach Anspruch 6,
**dadurch gekennzeichnet,**
**dass** ein Öffnungsquerschnitt (18) der Einspannhülse (15,25,25a) der Form der Spannuten (8,9) zumindest teilweise angepasst ist.

8. Bohrvorrichtung nach einem der Ansprüche 6 oder 7,
**gekennzeichnet durch**
eine mit der Einspannhülse (15) zusammenwirkende Dichtscheibe (21).

9. Bohrvorrichtung nach einem der Ansprüche 6 bis 8,
**dadurch gekennzeichnet,**
**dass** die Einspannhülse (25,25a) als Spannschaft mit konstantem Außendurchmesser ausgebildet ist.

10. Bohrvorrichtung nach einem der Ansprüche 6 bis 9,
**dadurch gekennzeichnet,**
**dass** die Einspannhülse (15,25,25a) einen axialen Schlitz (26) aufweist.

11. Bohrvorrichtung nach einem der Ansprüche 6 bis 10,
**dadurch gekennzeichnet,**
**dass** die Einspannhülse (15,25,25a) Bereiche unterschiedlichen Innendurchmessers aufweist.

12. Bohrvorrichtung nach einem der Ansprüche 6 bis 11,
**dadurch gekennzeichnet,**
**dass** die Einspannhülse (15,25,25a) zur Aufnahme des Bohrwerkzeugs ein Sackloch aufweist.

## Claims

1. Drilling tool comprising
- a first drill bit (2) and at least two forward cutting edges (4, 5),
- a second drill bit (3) and at least two rear cutting edges (6, 7),
- a helical chip groove (8, 9), respectively running from a forward cutting edge (4, 5) to a rear cutting edge (6, 7),
**characterized in that** the chip groove (8, 9) is formed in an asymmetrical manner in an area (A) bordering the forward drill bit (2), in a symmetrical manner in a central area (B) and in an asymmetrical manner in an area (C) bordering the rear drill bit (3) and **in that** the central area (B) has a reduced diameter (D₂) in comparison with a maximum tool diameter (D₁) formed at the drill bits (2, 3).

2. Drilling tool according to one of the preceding claims, **characterized in that** the chip grooves (8, 9) are formed identically in the areas (A, C) bordering the drill bits (2, 3).

3. Drilling tool according to one of the preceding claims, **characterized in that** the drill bits (2, 3) are respectively formed by a tool tip (12, 13) connected to the main body (14).

4. Drilling tool according to one of the preceding claims, **characterized by** a cooling channel (11) respectively assigned to a cutting edge (4, 5, 6, 7) on both drill bits (2, 3).

5. Drilling tool set comprising a number of drilling tools according to one of the preceding claims, **characterized in that** the drilling tools have different tool diameters (D₁), but the same diameter (D₂) in the central region (B).

6. Drilling device, comprising
■ a drilling tool according to one of Claims 1 to 4,
■ a clamping device with a clamping sleeve (15, 25, 25a), having an inner profiling (20) which is at least partially adapted to the form of the chip grooves (8, 9) and into which the drilling tool can be interchangeably screwed.

7. Drilling device according to Claim 6, **characterized in that** an opening cross section (18) of the clamping sleeve (15, 25, 25a) is at least partially adapted to the form of the chip grooves (8, 9).

8. Drilling device according to either of Claims 6 and 7, **characterized by** a sealing disc (21) interacting with the clamping sleeve (15).

9. Drilling device according to one of Claims 6 to 8, **characterized in that** the clamping sleeve (25, 25a) is formed as a clamping shank with a constant outside diameter.

10. Drilling device according to one of Claims 6 to 9, **characterized in that** the clamping sleeve (15, 25, 25a) has an axial slit (26).

11. Drilling device according to one of Claims 6 to 10, **characterized in that** the clamping sleeve (15, 25, 25a) has areas of different inside diameter.

12. Drilling device according to one of Claims 6 to 11, **characterized in that** the clamping sleeve (15, 25, 25a) has a blind hole for receiving the drilling tool.

## Revendications

1. Outil de perçage avec
- une première pointe de foret (2) et au moins deux tranchants antérieurs (4, 5),
- une deuxième pointe de foret (3) et au moins deux tranchants postérieurs (6, 7),
- respectivement une rainure à copeaux hélicoïdale (8, 9) s'étendant d'un tranchant antérieur (4, 5) à un tranchant postérieur (6, 7),
**caractérisé en ce que** la rainure à copeaux (8, 9) est en soi asymétrique dans une zone (A) adjacente à la pointe de foret antérieure (2), en soi symétrique dans une zone centrale (B) et en soi asymétrique dans une zone (C) adjacente à la pointe de foret postérieure (3) et **en ce que** la zone centrale (B) présente un diamètre réduit (D₂) par comparaison avec un diamètre d'outil maximal (D₁) formé sur les pointes de foret (2, 3).

2. Outil de perçage selon la revendication précédente, **caractérisé en ce que** les rainures à copeaux (8, 9) sont réalisées identiquement dans les zones (A, C) adjacentes aux pointes de foret (2, 3).

3. Outil de perçage selon l'une quelconque des revendications précédentes, **caractérisé en ce que** les pointes de foret (2, 3) sont formées respectivement par une pointe d'outil (12, 13) assemblée au corps de base (14).

4. Outil de perçage selon l'une quelconque des revendications précédentes, **caractérisé par** un canal de refroidissement (11) respectivement associé à un tranchant (4, 5, 6, 7) sur les deux pointes de foret (2, 3).

5. Ensemble d'outils de perçage comprenant plusieurs outils de perçage selon l'une quelconque des revendications précédentes, **caractérisé en ce que** les outils de perçage présentent des diamètres d'outil différents (D₁) mais un même diamètre (D₂) dans la zone centrale (B).

6. Dispositif de perçage, comprenant
- un outil de perçage selon l'une quelconque des revendications 1 à 4,
- un dispositif de serrage avec une douille de serrage (15, 25, 25a) avec un profilage intérieur (20) au moins partiellement adapté à la forme des rainures à copeaux (8, 9), dans lequel l'outil de perçage peut être vissé de façon remplaçable.

7. Dispositif de perçage selon la revendication 6, **caractérisé en ce qu'**une section transversale d'ouverture (18) de la douille de serrage (15, 25, 25a) est adaptée au moins en partie à la forme des rainures à copeaux (8, 9).

8. Dispositif de perçage selon l'une quelconque des revendications 6 ou 7, **caractérisé par** une rondelle d'étanchéité (21) coopérant avec la douille de serrage (15).

9. Dispositif de perçage selon l'une quelconque des revendications 6 à 8, **caractérisé en ce que** la douille de serrage (25, 25a) se présente sous la forme d'une tige de serrage de diamètre extérieur constant.

10. Dispositif de perçage selon l'une quelconque des revendications 6 à 9, **caractérisé en ce que** la douille de serrage (15, 25, 25a) présente une fente axiale (26).

11. Dispositif de perçage selon l'une quelconque des revendications 6 à 10, **caractérisé en ce que** la douille de serrage (15, 25, 25a) présente des zones de diamètre intérieur différent.

12. Dispositif de perçage selon l'une quelconque des revendications 6 à 11, **caractérisé en ce que** la douille de serrage (15, 25, 25a) présente un trou borgne destiné à recevoir l'outil de perçage.
